# FASCICULE DE BREVET EUROPEEN

(11) **EP 1 825 313 B1**
(45) Date de publication et mention de la délivrance du brevet: **21.05.2008**
(21) Numéro de dépôt: 05824670.3
(22) Date de dépôt: 12.12.2005
(51) Int. Cl.: G02B 6/44

(54) **PROCEDE ET DISPOSITIF DE FIXATION SUR UN SUPPORT DE TUBES POUR CABLES DE TELECOMMUNICATION**
VERFAHREN UND EINRICHTUNG ZUR FIXIERUNG VON STÜTZRÖHRCHEN FÜR TELEKOMMUNIKATIONSKABEL AUF EINEM TRÄGER
METHOD AND DEVICE FOR FIXING ON A SUPPORT TUBES FOR TELECOMMUNICATION CABLES

(30) Priorité: 14.12.2004 FR 0413252
(43) Date de publication de la demande: 29.08.2007
(73) Titulaire: France Telecom S.A., 75015 Paris (FR)
(72) Inventeur: CAILLEAUX, Jean-Marc, F-22300 Lannion (FR); CAHUZAC, Bernard, F-34080 Montpellier (FR)
(74) Mandataire: Boura, Olivier
(86) Numéro de dépôt international: PCT/FR2005/051076
(87) Numéro de publication internationale: WO 2006/064157

(56) Documents cités:
- US-A- 5 074 636
- US-A- 5 082 338
- US-B1- 6 222 977

## Description

### Arrière-plan de l'invention

La présente invention se rapporte au domaine général des télécommunications. Elle concerne plus particulièrement un procédé et dispositif de fixation de tubes pour câbles de télécommunication sur un support, tel qu'un boîtier de raccordement de câbles de télécommunication en partie terminale de réseau.

Dans un réseau de télécommunications, les tubes dans lesquels sont installés les câbles de télécommunication (telles que des fibres optiques) aboutissent généralement en partie terminale à des boîtiers de raccordement sur lesquels ils sont fixés. La fixation des tubes transportant ces câbles de télécommunication doit répondre à deux exigences : d'une part, assurer une continuité mécanique avec les boîtiers de raccordement sur lesquels ils sont fixés, et d'autre part permettre une protection sur toute la longueur du câble de télécommunication.

Les solutions classiques consistent à fixer les tubes de transport de câbles de télécommunication aux boîtiers de raccordement par des dispositifs généralement volumineux, tels que des dominos, vissages ou collages. Voir p.ex. US-B1-6,222,977 (Kawada et al.), publié le 24 avril 2001. De tels dispositifs ne permettent pas de réaliser la fixation d'un grand nombre de tubes sur un même boîtier de raccordement. Ainsi, les boîtiers de raccordement doivent présenter des parois de surface importante dès que l'on souhaite fixer un nombre élevé de tubes, ce qui induit des problèmes de placement et de coût de ces boîtiers.

### Objet et résumé de l'invention

La présente invention a donc pour but principal de pallier de tels inconvénients en proposant un procédé et un dispositif permettant la fixation sur un support de tubes avec un encombrement réduit et tout en respectant les exigences de continuité mécanique et de protection des câbles de télécommunication.

A cet effet, il est prévu un procédé de fixation sur un support de tubes pour câbles de télécommunication, le support présentant une pluralité d'orifices de fixation destinés à recevoir chacun une extrémité de tube, le procédé étant caractérisé en ce qu'il consiste à monter en force une bague cylindrique autour de l'extrémité du tube à fixer sur le support, à insérer en force une vis cylindrique creuse dans l'extrémité du tube à fixer de sorte qu'une extrémité libre de la vis fait saillie par rapport à l'extrémité du tube, insérer l'extrémité libre de la vis au travers d'un orifice du support, et à fixer l'extrémité libre de la vis sur le support.

Par l'utilisation d'une vis cylindrique creuse, il est ainsi possible de fixer un grand nombre de tubes sur une même paroi d'un boîtier de raccordement. La présence d'une bague cylindrique autour de l'extrémité du tube à fixer permet par ailleurs d'assurer une continuité mécanique avec le support. Enfin, la protection du câble de télécommunication installé dans le tube est obtenu du fait que le câble ne peut sortir du tube que du côté du support opposé à celui contre lequel est fixé le tube (c'est-à-dire à l'intérieur du boîtier de raccordement).

Selon une disposition de l'invention, la fixation de l'extrémité libre de la vis sur le support consiste à visser celle-ci dans un filetage correspondant de l'orifice du support. Cette solution permet d'optimiser le nombre de tubes à fixer sur le même support. En effet, l'encombrement du dispositif de fixation étant réduit à la simple section de l'extrémité libre de la vis, il est possible de réduire au maximum l'intervalle entre deux tubes adjacents. En outre, aucun outil particulier n'est nécessaire à la mise en oeuvre de cette disposition.

Selon une autre disposition de l'invention, la fixation de l'extrémité libre de la vis sur le support consiste à serrer un écrou sur ladite extrémité libre de la vis. Cette autre solution présente l'avantage de pouvoir fixer des tubes de grande longueur sans avoir à manipuler les tubes (notamment en les vrillant).

L'invention a également pour objet un dispositif de fixation sur un support de tubes pour câbles de télécommunication, d'après la revendication 4, le support présentant une pluralité d'orifices de fixation destinés à recevoir chacun une extrémité de tube, le dispositif étant caractérisé en ce qu'il comporte une bague cylindrique destinée à être montée en force autour de l'extrémité du tube à fixer sur le support, une vis cylindrique creuse destinée à être insérée en force dans l'extrémité du tube à fixer de sorte qu'une extrémité libre de la vis fait saillie par rapport à l'extrémité du tube, et des moyens de fixation de l'extrémité libre de la vis sur le support.

L'invention a enfin pour objet un boîtier de raccordement de télécommunication, comportant une paroi latérale d'entrée de fibres optiques, une paroi latérale de sortie de fibres optiques, et une pluralité de tubes de transport des fibres optiques, caractérisé en ce qu'il comporte en outre une pluralité de dispositifs tels que décrits précédemment pour la fixation des tubes de transport de fibres optiques sur la paroi latérale de sortie.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective et en éclaté d'un dispositif de fixation selon un mode de réalisation de l'invention ;
- la figure 2 est une vue d'un tube fixé sur un support au moyen du dispositif de la figure 1 ;
- la figure 3 est une vue d'un tube fixé sur un support au moyen d'un dispositif selon un autre mode de réalisation de l'invention ; et
- la figure 4 est une vue en perspective d'un boîtier de raccordement de télécommunication sur lequel est fixée une pluralité de tubes au moyen du dispositif de la figure 3.

### Description détaillée d'un mode de réalisation

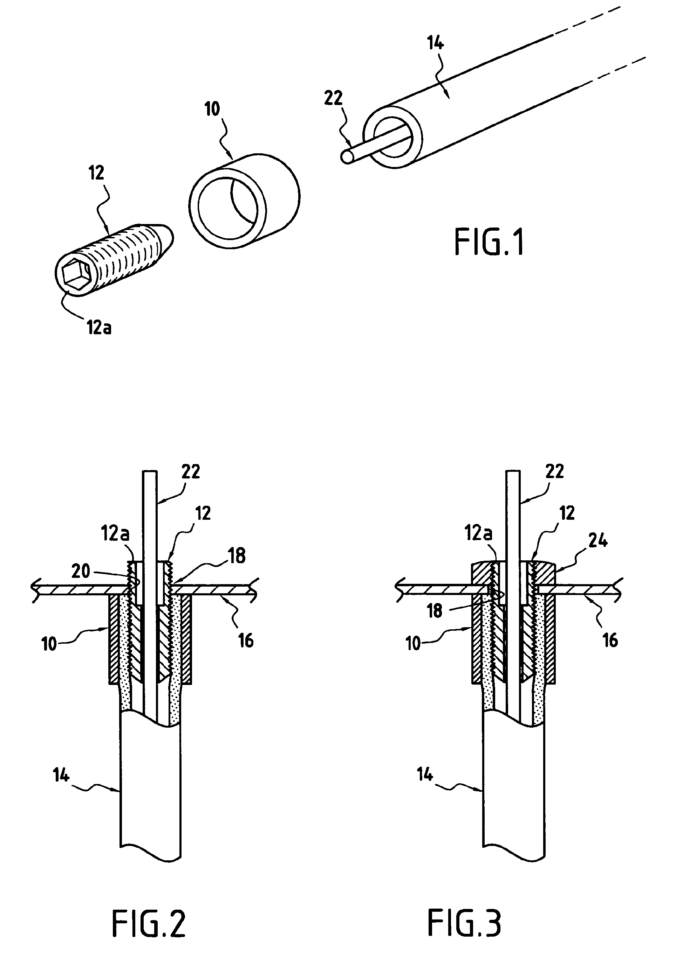

En liaison avec la figure 1, le dispositif de fixation selon un mode de réalisation de l'invention comporte une bague cylindrique 10, par exemple en métal, et une vis cylindrique creuse 12.

La bague cylindrique 10 est destinée à être montée en force autour de l'extrémité d'un tube 14 à fixer sur le support (non représenté). La bague 10 présente donc un diamètre interne qui est adapté au diamètre externe du tube 14. A titre d'exemple, pour un tube ayant un diamètre externe de 6 mm et un diamètre interne de 4 mm, la bague peut présenter un diamètre interne de 6 mm (et un diamètre externe de 8 mm).

Par ailleurs, lorsque la bague 10 est montée sur l'extrémité du tube 14, on notera que celle-ci est affleurante à cette extrémité du tube, c'est-à-dire qu'elle ne fait pas saillie par rapport à celle-ci.

Quant à la vis cylindrique creuse 12, elle est destinée à être insérée en force dans l'extrémité du tube 14 à fixer de sorte qu'une extrémité libre 12a de la vis fasse saillie par rapport à l'extrémité du tube. La vis creuse 12 présente donc un diamètre externe qui est adapté au diamètre interne du tube 14. Pour les diamètres du tube cités ci-dessus, la vis creuse 12 peut présenter, par exemple, un diamètre externe de 4,5 mm environ. En outre, la vis cylindrique 12 peut être du type auto-taraudeuse.

Sur la figure 2, le tube 14 est arrimé à un support 16, par exemple une paroi d'un boîtier de raccordement de télécommunication, au moyen de ce dispositif de fixation.

A cet effet, le support 16 présente une pluralité d'orifices circulaires de fixation 18 (un seul est représenté sur la figure 2). Ces orifices de fixation sont traversés par l'extrémité libre 12a des vis 12 de sorte que les vis font saillies du côté du support 16 opposé à celui contre lequel sont fixés les tubes.

Dans cet exemple de réalisation de la figure 2, l'orifice de fixation 18 est muni d'un filetage 20 complémentaire du filetage de la vis creuse 12 du dispositif de fixation. De la sorte, la fixation du tube 14 sur le support 16 s'effectue par vissage de l'extrémité libre 12a de la vis 12 dans cet orifice 18.

Une fois l'extrémité libre 12a de la vis 12 vissée dans l'orifice de fixation 18, l'une des extrémités de la bague 10 vient en contact contre le support 16, permettant ainsi d'assurer une rigidité mécanique à l'ensemble.

De plus, le câble de télécommunication 22 (par exemple une fibre optique) qui est monté dans le tube 14 peut déboucher du côté du support 16 opposé à celui contre lequel est fixé le tube en passant à l'intérieur de la vis 12. On notera que le câble de télécommunication est installé dans le tube 14 par des procédés connus tels que par soufflage ou soufflage-portage.

La figure 3 représente un autre mode de réalisation du dispositif de fixation selon l'invention.

Par rapport au dispositif des figures 1 et 2, les orifices de fixation 18 (un seul est représenté) ne sont pas filetés et le dispositif de fixation comporte en outre un écrou 24 qui est destiné à être serré sur l'extrémité libre 12a de la vis 12 afin d'assurer sa fixation sur le support 16.

Le câble de télécommunication 22 qui est monté dans le tube 14 débouche également du côté du support 16 opposé à celui contre lequel est fixé le tube en passant à l'intérieur à la fois de la vis 12 et de l'écrou 24.

Par rapport au mode de réalisation décrit en liaison avec les figures 1 et 2, ce dispositif présente l'avantage de permettre la fixation de tubes de grande longueur. En effet, il n'est pas nécessaire de vriller ces tubes pour permettre leur fixation sur le support.

Le procédé de fixation selon l'invention découle de manière évidente de ce qui précède.

Dans un premier temps, la bague cylindrique 10 est montée en force autour de l'extrémité du tube 14 à fixer sur le support 16. Ensuite, la vis creuse 12 est insérée en force dans le tube 14 de sorte qu'une extrémité libre 12a de celle-ci fasse saillie par rapport à l'extrémité du tube. Enfin, l'extrémité libre 12a de la vis est insérée dans un orifice 18 du support 16 pour y être fixé, soit par vissage dans celui-ci, soit à l'aide d'un écrou de serrage 24.

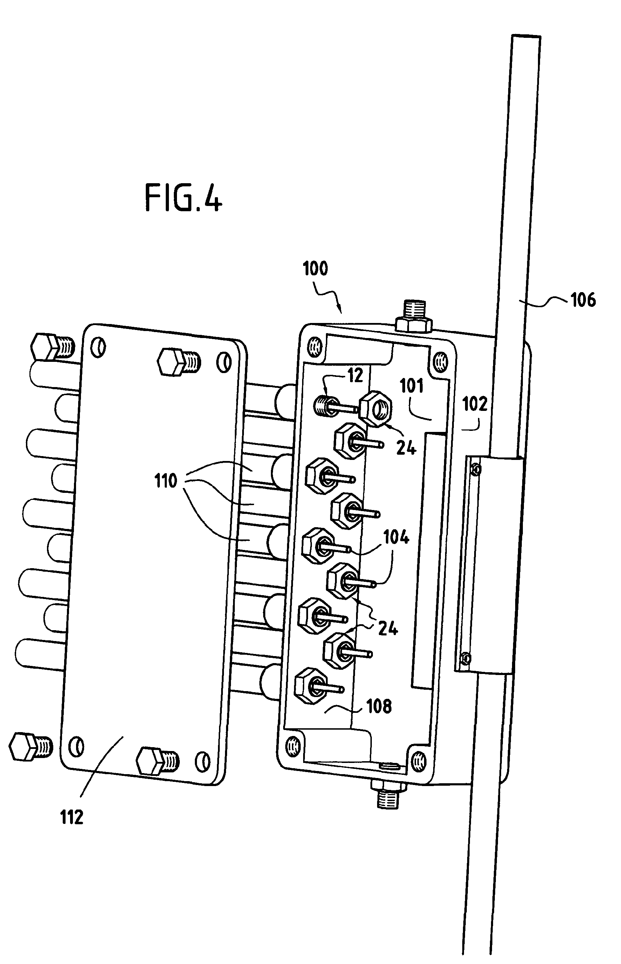

En se reportant à la figure 4, on décrira maintenant l'application du dispositif de fixation de la figure 3 à un boîtier de raccordement mural de télécommunication. Le boîtier de raccordement 100 se présente sous la forme d'un parallélépipède rectangle dont la paroi 101 formant le fond est fixée au mur.

L'une des parois latérales 102 formant paroi d'entrée du boîtier de raccordement 100 reçoit une pluralité de fibres optiques 104 en provenance d'un câble principal 106 fixé au mur. Cette paroi latérale d'entrée 102 est fixée directement contre le câble principal 106 afin d'éviter tout dommage sur les fibres optiques 104.

La paroi latérale 108 du boîtier 100 qui est opposée à la paroi d'entrée 102 forme une paroi de sortie et est destinée à recevoir une pluralité de tubes 110 transportant les fibres optiques 104 provenant du câble principal 106 vers les utilisateurs de ces fibres.

Les tubes 110 sont fixés sur la paroi de sortie 108 au moyen de dispositifs de fixation tels que décrits en référence à la figure 3. Alternativement, ces dispositifs de fixation pourraient être ceux du mode de réalisation de l'invention illustré par les figures 1 et 2.

On remarquera que les tubes 110 de transport des fibres optiques sont fixés sur la paroi de sortie 108 au moyen d'une disposition en quinconce qui permet d'augmenter le nombre de fixation de tubes sur cette paroi.

De plus, on notera également que le boîtier de raccordement 100 comporte également une paroi 112 formant couvercle qui assure une protection des fibres optiques à l'intérieur du boîtier.

## Revendications

1. Procédé de fixation sur un support de tubes pour câbles de télécommunication, le support (16) présentant une pluralité d'orifices de fixation (18) destinés à recevoir chacun une extrémité de tube, le procédé étant **caractérisé en ce qu'**il consiste à :
- monter en force une bague cylindrique (10) autour de l'extrémité du tube (14) à fixer sur le support (16) ;
- insérer en force une vis cylindrique creuse (12) dans l'extrémité du tube (14) à fixer de sorte qu'une extrémité libre (12a) de la vis (12) fait saillie par rapport à l'extrémité du tube ;
- insérer l'extrémité libre (12a) de la vis (12) au travers d'un orifice (18) du support ; et
- fixer l'extrémité libre (12a) de la vis (12) sur le support.

2. Procédé selon la revendication 1, **caractérisé en ce que** la fixation de l'extrémité libre (12a) de la vis (12) sur le support (16) consiste à visser celle-ci dans un filetage correspondant (20) de l'orifice (18) du support.

3. Procédé selon la revendication 1, **caractérisé en ce que** la fixation de l'extrémité libre (12a) de la vis (12) sur le support (16) consiste à serrer un écrou (24) sur ladite extrémité libre de la vis.

4. Dispositif de fixation sur un support de tubes pour câbles de télécommunication, comportant:
- un support (16) présentant une pluralité d'orifices de fixation (18) destinés à recevoir chacun une extrémité de tube (14),
- une bague cylindrique (10) destinée à être montée en force autour de l'extrémité du tube (14) à fixer sur le support ;
- une vis cylindrique creuse (12) destinée à être insérée en force dans l'extrémité du tube (14) à fixer de sorte qu'une extrémité libre (12a) de la vis (12) fait saillie par rapport à l'extrémité du tube ; et
- des moyens de fixation (20, 24) de l'extrémité libre (12a) de la vis (12) sur le support (16).

5. Dispositif selon la revendication 4, **caractérisé en ce que** les orifices de fixation (18) du support (16) présentent chacun un filetage complémentaire (20) à celui de la vis (12) de façon à permettre la fixation de l'extrémité libre (12a) de ladite vis (12) sur le support par vissage.

6. Dispositif de fixation selon la revendication 4, **caractérisé en ce qu'**il comporte en outre un écrou (24) destiné à être serré sur l'extrémité libre (12a) de la vis (12) afin d'assurer sa fixation sur le support (16).

7. Boîtier (100) de raccordement de télécommunication, comportant une paroi latérale d'entrée (102) de fibres optiques (104), une paroi latérale de sortie (108) de fibres optiques (104), et une pluralité de tubes de transport (110) des fibres optiques (104), **caractérisé en ce qu'**il comporte en outre une pluralité de dispositifs selon l'une quelconque des revendications 4 à 6 pour la fixation des tubes de transport (110) de fibres optiques sur la paroi latérale de sortie (108).

## Claims

1. Method of fixing to a telecommunication cables conduit support, the support (16) having a plurality of fixing orifices (18) each intended to receive a conduit end, the method being **characterized in that** it consists in:
- force-fitting a cylindrical ring (10) around the end of the conduit (14) to be fixed to the support (16);
- force-inserting a hollow cylindrical screw (12) into the end of the conduit (14) to be fixed so that a free end (12a) of the screw (12) projects from the end of the conduit;
- inserting the free end (12a) of the screw (12) through an orifice (18) in the support; and
- fixing the free end (12a) of the screw (12) to the support.

2. Method according to Claim 1, **characterized in that** fixing the free end (12a) of the screw (12) to the support (16) entails screwing the latter into a corresponding thread (20) in the orifice (18) of the support.

3. Method according to Claim 1, **characterized in that** fixing the free end (12a) of the screw (12) to the support (16) entails tightening a nut (24) onto said free end of the screw.

4. Device for fixing to a telecommunication cables conduit support, comprising:
- a support (16) having a plurality of fixing orifices (18) each intended to receive an end of conduit (14),
- a cylindrical ring (10) intended to be force-fitted around the end of the conduit (14) to be fixed to the support;
- a hollow cylindrical screw (12) intended to be force-inserted into the end of the conduit (14) to be fixed so that a free end (12a) of the screw (12) projects from the end of the conduit; and
- means (20, 24) of fixing the free end (12a) of the screw (12) to the support (16).

5. Device according to Claim 4, **characterized in that** the fixing orifices (18) in the support (16) each have a thread (20) that complements that of the screw (12) so that the free end (12a) of said screw (12) can be fixed to the support by screw-fastening.

6. Fixing device according to Claim 4, **characterized in that** it also comprises a nut (24) intended to be tightened onto the free end (12a) of the screw (12) in order to fix it to the support (16).

7. Telecommunication connection box (100), comprising a lateral entry wall (102) for optical fibres (104), a lateral exit wall (108) for optical fibres (104), and a plurality of conduits (110) for conveying optical fibres (104), **characterized in that** it also comprises a plurality of devices according to any one of Claims 4 to 6 for fixing the conduits (110) conveying optical fibres to the lateral exit wall (108).

## Patentansprüche

1. Verfahren zum Befestigen von Telekommunikationskabeln an einem Röhrenhalter, wobei der Halter (16) mehrere Befestigungsöffnungen (18) aufweist, die dazu vorgesehen sind, jeweils ein Röhrenende aufzunehmen, wobei das Verfahren **dadurch gekennzeichnet ist, dass** es darin besteht:
- einen zylindrischen Ring (10) mit Kraft um das an dem Halter (16) zu befestigende Ende der Röhre (14) anzubringen;
- eine zylindrische Hohlschraube (12) mit Kraft in das zu befestigende Ende der Röhre (14) einzusetzen, derart, dass ein freies Ende (12a) der Schraube (12) in Bezug auf das Ende der Röhre vorsteht;
- das freie Ende (12a) der Schraube (12) durch eine Öffnung (18) des Halters einzusetzen; und
- das freie Ende (12a) der Schraube (12) am Halter zu befestigen.

2. Verfahren nach Anspruch 1, **dadurch gekennzeichnet, dass** das Befestigen des freien Endes (12a) der Schraube (12) am Halter (16) darin besteht, diese in ein entsprechendes Gewinde (20) der Öffnung (18) des Halters zu schrauben.

3. Verfahren nach Anspruch 1, **dadurch gekennzeichnet, dass** die Befestigung des freien Endes (12a) der Schraube (12) am Halter (16) darin besteht, eine Mutter (24) auf das freie Ende der Schraube zu schrauben.

4. Vorrichtung zum Befestigen von Telekommunikationskabeln an einem Röhrenhalter, die enthält:
- einen Halter (16), der mehrere Befestigungsöffnungen (18) aufweist, die dazu bestimmt sind, jeweils ein Ende einer Röhre (14) aufzunehmen;
- einen zylindrischen Ring (10) der dazu bestimmt ist, mit Kraft um das an dem Halter zu befestigende Ende der Röhre (14) angebracht zu werden;
- eine zylindrische Hohlschraube (12), die dazu bestimmt ist, mit Kraft in das zu befestigende Ende der Röhre (14) eingesetzt zu werden, derart, dass ein freies Ende (12a) der Schraube (12) in Bezug auf das Ende der Röhre vorsteht; und
- Mittel (20, 24) zum Befestigen des freien Endes (12a) der Schraube (12) am Halter (16).

5. Vorrichtung nach Anspruch 4, **dadurch gekennzeichnet, dass** die Befestigungsöffnungen (18) des Halters (16) jeweils ein Gewinde (20) aufweisen, das zu jenem der Schraube (12) komplementär ist, derart, dass die Befestigung des freien Endes (12a) der Schraube (12) am Halter durch Schrauben möglich ist.

6. Befestigungsvorrichtung nach Anspruch 4, **dadurch gekennzeichnet, dass** sie außerdem eine Mutter (24) enthält, die dazu bestimmt ist, auf das freie Ende (12a) der Schraube (12) geschraubt zu werden, um deren Befestigung am Halter (16) sicherzustellen.

7. Telekommunikations-Anschlussgehäuse (100), das eine Eingangsseitenwand (102) für Lichtleitfasern (104), eine Ausgangsseitenwand (108) für Lichtleitfasern (104) und mehrere Transportröhren (110) für Lichtleitfasern (104) enthält, **dadurch gekennzeichnet, dass** es außerdem mehrere Vorrichtungen nach einem der Ansprüche 4 bis 6 für die Befestigung der Transportröhren (110) der Lichtleitfasern an der Ausgangsseitenwand (108) enthält.
